# EUROPEAN PATENT APPLICATION

(11) **EP 2 343 504 A1**
(43) Date of publication of application: **13.07.2011**
(21) Application number: 11000064.3
(22) Date of filing: 06.01.2011
(51) Int. Cl.: G01C 21/36

(54) **Method, navigation device, system and computer program product for using a navigation application**

(30) Priority: 07.01.2010 EP 10000075; 07.01.2010 US 292983 P
(71) Applicant: Deutsche Telekom AG, 53113 Bonn (DE)
(72) Inventor: Keller, Walter, 40880 Ratingen (DE)
(74) Representative: Schwöbel, Thilo K.

(57) **Abstract**

The invention relates to a method, navigation device, a system, and a computer program product for using a navigation application, wherein a communication module is assigned to the navigation device, wherein the navigation application requires the definition of at least one destination location, wherein the method comprises the following steps:
-- the communication module receiving a message comprising an input information related to the destination location, and
-- the navigation application using the input information for route guidance from the current location of the navigation device to the destination location.

## Description

### BACKGROUND

The present invention relates to a method, a navigation device, a system, and a computer program product for using a navigation application, wherein a communication module comprises a mobile telecommunication interface, wherein the communication module is assigned to the navigation device, wherein the navigation application requires the definition of at least one destination location.

Currently there is a given efforts and attentiveness requirements for a driver of a vehicle for defining the destination of a navigation device inside the vehicle, which also may be safety relevant for the driver, the vehicle and/or other traffic participants. A user or driver has to input or provide the destination information to the navigation device while performing other tasks such as driving a vehicle or steering an aircraft. E.g. he has to input or retrieve geographical coordinates of the destination location.

### SUMMARY

An object of the present invention is to provide a method, a navigation device, a system, and a computer program product for using a navigation application such that the ease of usage the navigation device is enhanced, especially with respect to safety when using the navigation device, e.g., while driving a vehicle.

The object of the present invention is achieved by a method for using a navigation application of a navigation device, wherein the navigation device is located at a departure location, wherein a communication module comprises a mobile telecommunication interface, wherein the communication module is assigned to the navigation device, wherein the navigation application requires the definition of at least one destination location, wherein the method comprises the following steps:
-- the communication module receiving a message comprising an input information related to the destination location, and
-- the navigation application using the input information for route guidance from the current location of the navigation device to the destination location.

According to the present invention, it is advantageously possible to reduce the efforts and attentiveness requirements, e.g. for a driver of a vehicle, for defining the destination of a navigation device inside the vehicle. The reduction of the efforts and the attentiveness requirements regards at least the following aspects:
-- on the one hand, according to the present invention, a user does not need to know the precise address information that the navigation application requires prior to performing the navigation task, i.e. the user does not need to retrieve this address information but can provide another piece of information indicative of the destination information;
-- on the other hand, according to the present invention, the user does not need to input or provide the destination information to the navigation device while performing other tasks such as driving a vehicle or steering an aircraft because the destination information is retrieved by the navigation application from the input information received by the communication module.

The object is furthermore achieved by a method for using a navigation application of a navigation device, wherein the navigation device is located at a departure location, wherein a communication module comprises a mobile telecommunication interface, wherein the communication module is assigned to the navigation device, wherein the navigation application requires the definition of at least one destination location, wherein the method comprises the following steps:
-- the communication module receiving a message comprising an input information related to the destination location, and
-- the navigation application using the input information for route guidance from the current location of the navigation device to the destination location,
   wherein prior to receiving the input information by the communication module, the method comprises the step of generating the input information at a data centre in dependency of an identity information,
   wherein prior to generating the input information by the data centre, the method comprises the step of requesting the input information by a client device and based on the identity information,
-- wherein the client device comprises the communication module,
-- wherein the input information is requested via an electronic data message, and
-- wherein the mobile telecommunication interface is connected to a cellular or non-cellular communication network,
   wherein the communication module comprises a communication memory, wherein the identity information is stored in the communication memory and wherein the step of requesting the input information is conducted based on the identity information stored in the communication memory, wherein the input information is transferred from the communication module to the navigation application for route guidance to the destination location, and wherein the input information is stored in the communication memory, the input information being preferably stored in the communication memory in addition to the data set of the corresponding identity information for further usage.

According to the present invention, the input information is related to the destination location in the sense that the input information comprises the geographical coordinates of the destination location, e.g. an information regarding the geographical longitude and latitude of the destination location. The input information can, e.g., be transmitted by means of an SMS message (Short Message Service message) and/or by means of IP-message (Internet Protocol message) and/or by means of an UDP message (User Datagram Protocol message) and/or by means of a modem or data service and/or by means of an e-mail and/or by means of another suitable transmission method.

It is preferred according to the present invention, that the destination location is used by the navigation application for route guidance without a specific interaction of a user. Thereby, a further reduction regarding the efforts, e.g. of a driver of a vehicle, for defining the destination of a navigation device inside the vehicle is advantageously possible, i.e. the route guidance is preferably activated automatically and without any user interaction. Such an automated activation of the route guidance is e.g. possible by means of extracting the input information (related to the destination information) from the transmitted message. On the other hand, the present invention can also be realized such that a user interaction is required for performing the route guidance. Such a user interaction can, e.g., be a manual acknowledgement (for example by an haptic interaction such as pressing a button or a softbutton) or by an acoustic command (such as a spoken command).

Furthermore it is preferred according to the present invention that the navigation device comprises a navigation memory and that a representation of the destination location is stored in the navigation memory without a specific interaction of a user. Thereby, it is advantageously possible that the information regarding the destination location can be reused in case a navigation to the same destination location is required in the future.

It is furthermore preferred according to the present invention that prior to receiving the input information by the communication module, the method comprises the step of generating the input information at a data centre in dependency of an identity information, wherein preferably the identity information comprises at least one out of the following: a telephone number of a person associated to the destination location, an e-mail address of a person associated to the destination location, an address information associated to the destination location, an URL (Uniform Resource Locator) associated to the destination location, a name information associated to the destination location.

Thereby, it is advantageously possible to transmit the input information based on information other than the precise address information of the destination location.

Furthermore it is preferred according to the present invention that prior to generating the input information by the data centre, the method comprises the step of requesting the input information by a client device and based on the identity information, wherein the client device preferably comprises the communication module.

According to the present invention, it is advantageously possible that the input information is requested and transferred to the communication module by means of an associated data centre such as a telephone inquiry service.

It is furthermore preferred according to the present invention that the communication module comprises a communication memory, wherein the identity information is stored in the communication memory and wherein the step of requesting the input information is conducted based on the identity information stored in the communication memory, wherein the communication memory is preferably part of a SIM card (Subscriber Identity Module card).

According to the present invention, it is advantageously possible that an easy update of the communication memory, especially an address book application is possible by means of requesting the input information (i.e. geographical information related to an address book entry) from the data centre.

Furthermore it is preferred according to the present invention that the input information is stored in the communication memory, and wherein the input information is transferred from the communication memory to the navigation application for route guidance to the destination location.

According to the present invention, it is thereby advantageously possible that the input information stored in the communication memory such that it is used subsequently to initiate a route guidance to the destination location. Preferably, the input information can be stored in a SIM card (Subscriber Identity Module card) or in a memory card. Furthermore, it is possible that the input information is stored in a memory assigned to the subscriber via the telecommunications network. Preferably, the input information is stored in the communication memory such that the input information is part of an address book application of the communication module. In this case, it is advantageously possible according to the present invention to initiate a route guidance to the geographical information (input information corresponding to or related to the destination location) by simply activating a respective function of the communication module, e.g. by means of an additional menue entry (comparable to other menue entries like "initiate a dialing operation to the respective address book entry" or the like).

It is furthermore preferred according to the present invention that the current location of the navigation device is stored in the communication memory, wherein such storing in the communication memory occurs preferably repeatedly, especially once in a predefined time interval and/or once in a predefined distance interval in case the navigation device is moved.

According to the present invention, it is advantageously possible that an efficient localization, e.g. of persons, is possible. It is also advantageously possible to realize an emergency search and rescue service by means of storing the current location of the navigation device such that a transmission of these current positions to a data centre or other network entity is possible in order to provide a rescue service to the user of the navigation device.

Furthermore it is preferred according to the present invention that the function of storing the current location of the navigation device in the communication memory is activated remotely, especially by a surveillance entity.

According to the present invention, the current location of the navigation device is remotely stored in the same storage register, whereas the register contains always the actual navigation position and/or the positions are stored in consecutive registers, whereas the memory contains a complete position tracking of the navigation device.

According to the present invention, it is advantageously possible that even in case that the user of the navigation device is not able to activate the transmission of the current location of the navigation device, a rescue service can be provided.

The present invention also relates to a navigation device for using a navigation application according to a method according to the present invention, wherein the navigation device is a mobile navigation device, wherein the navigation device is preferably used on board a motorized or non-motorized vehicle, especially a car, a truck, a ship, a boat, an aircraft.

It is preferred, that the navigation device is an integrated navigation and communication device comprising the communication module, or wherein a communication device comprises the communication module, the communication device being connectable to the navigation device via a wired connection and/or via a wireless connection, especially a short range wireless connection and especially according to one out of the following standards: NFC (Near Field Communication) and/or Bluetooth and/or WLAN (Wireless Local Area Network) and/or IR (InfraRed).

The present invention also relates to a system for using a navigation application according to a method according to the present invention, wherein the system comprises the navigation device, the communication module, and wherein the system preferably comprises the data centre, the data centre comprising preferably a surveillance entity.

Computer program product comprising software code that when executed on a computing system performs a method for using a navigation application according to the present invention.

Furthermore, the present invention relates to
-- a program comprising a computer readable program code for using a navigation application according to the present invention or for controlling a navigation device according to the present invention, and to
-- a computer program product comprising a computer readable software code that when executed on a computing system performs a method for using a navigation application according to the present invention.

### BRIEF DESCRIPTION OF THE DRAWINGS

Figure 1 schematically illustrates a first embodiment of the present invention where an integrated navigation and communication device is used.

Figure 2 schematically illustrates a second embodiment of the present invention where a navigation device and a communication device is used.

Figures 3 and 4 schematically illustrate examples of information exchanges between a data centre and a communication device as well as between the communication device and a navigation device.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

The techniques described herein may be implemented by various means. For example, these techniques may be implemented in hardware (one or more devices), firmware (one or more devices), software (one or more modules), or combinations thereof. For a firmware or software, implementation can be through modules (for example, procedures, functions, or the like) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

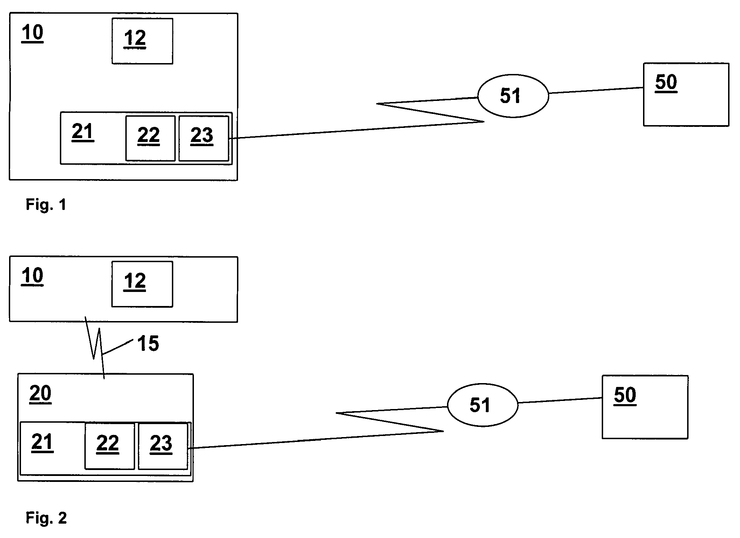

In Figure 1, a first embodiment of the present invention is schematically shown. According to the first embodiment of the present invention, an integrated navigation and communication device 10 is used. Hereinafter, the integrated navigation and communication device 10 is also called navigation device 10. According to the first embodiment of the present invention, the navigation device 10 comprises a communication module 21, i.e. the navigation device 10 is an integrated navigation and communication device 10. The navigation device 10 further comprises a navigation memory 12. The communication module 21 comprises a communication memory 22 and a telecommunication interface 23.

In Figure 2, a second embodiment of the present invention is schematically shown. According to the second embodiment of the present invention, the navigation device 10 does not comprise a communication module 21 but communicates with a communication device 20 by means of a connection 15. The connection 15 is a wired connection or a wireless connection but preferably, it is a wireless connection, especially a short range wireless connection and for example according to at least one out of the following standards: NFC (Near Field Communication) and/or Bluetooth and/or WLAN (Wireless Local Area Network) and/or IR (InfraRed). According to the second embodiment, the navigation device 10 also comprises a navigation memory 12. The communication device 20 comprises a communication module 21 and the communication module 21 comprises a communication memory 22 and a telecommunication interface 23.

According to both embodiments of the present invention, the communication module (i.e. the telecommunications interface 23) is connected to a data centre 50 and receives input information 51 from the data centre 50. The input information 51 is input into the navigation device 10. This means that according to the first embodiment, the input information 51 are forwarded to the navigation application inside the navigation device 10 and according to the second embodiment, the input information 51 are transmitted via the connection between the communication device 20 and the navigation device 10 such that the navigation application can provide the requested service to a user, i.e. in general a route guidance from the current location (i.e. the departure location of the navigation device 10) to the destination location. It is preferred according to the present invention that the route guidance is performed after the reception of the input information by the communication module 21 without any further user interaction.

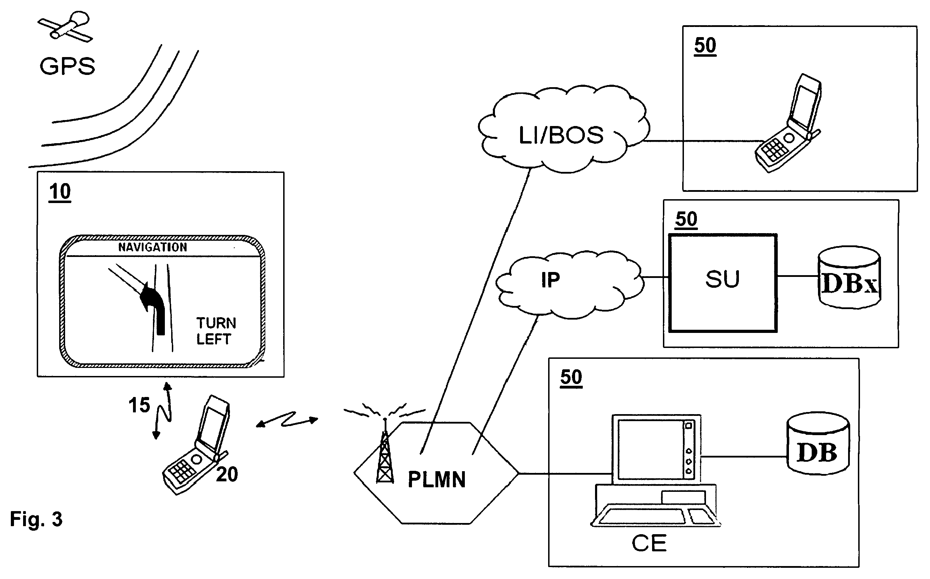

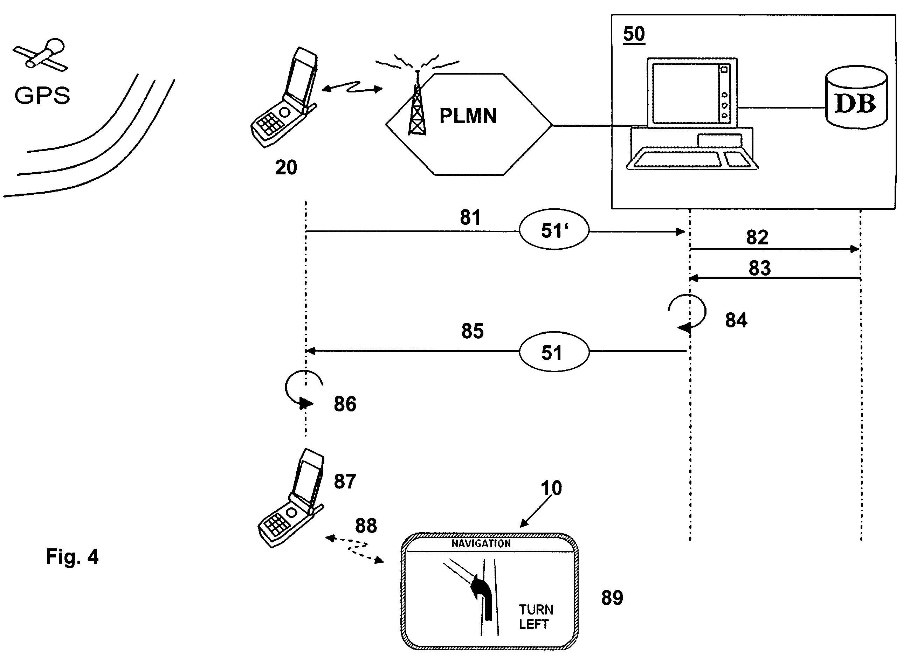

In Figures 3 and 4, examples of information exchanges between a data centre and a communication device as well as between the communication device and a navigation device are schematically illustrated. In Figure 3 and in Figure 4, the case of a navigation device 10 without an integrated communication module 21 is represented. The input information 51 are transmitted via the communication link 15 between the navigation device 10 and the communication device 20. The communication device 20 comprises the communication module 21 which is not depicted in Figures 3 and 4.

In Figure 3, three different possibilities of a data centre 50 is schematically depicted. E.g. the data centre 50 comprises a Computer Equipment CE and a database DB such that the input information 51 is retrieved from the database DB and transmitted to the communication device 20, e.g. via a PLMN (Public Land Mobile Network) infrastructure. The CE can be running fully automatically as well as supported/used by a person, e.g. for example an operator of a telephone directory inquiry service, an operator of an internet location inquiry service, a secretary, a office agent or any other service agency or person. According to another example, the data centre 50 comprises a Server Unit SU and a further database DBx such that the input information 51 is retrieved from the further database DBx and transmitted to the communication device 20, wherein the data centre 50 is preferably connected to the PLMN via an Internet network IP, e.g. using the internet protocol. According to still another example, the data centre 50 comprises a surveillance entity such as the BOS network (digital radio network for security authorities and organisations or authorities and organisations with safety tasks, for example a TETRA network).

In Figure 4, a possible information exchange between a data centre 50 and a communication device 20 according to an exemplary use scenario of the present invention is represented. In a first step (designated by means of reference sign 81 in Figure 4), the user of the communication device 20 e.g. requests the input information (i.e. the geographical information related to the destination location) 51 at the data centre 50 by means of sending a request message 51' to the data centre. This request message 51' is, e.g., a voice message (i.e. a voice call to an operator of a telephone directory inquiry service (such as the 011833-service in Germany)) or an SMS message. By means of transmitting an identity information (such as the name or the address or the telephone number or the like), the input information 51 can be retrieved in a second step (designated by means of reference sign 82 in Figure 4) form a database DB and provided to the data centre in a third step (designated by means of reference sign 83 in Figure 4). By means, e.g., of a location service (designated by means of reference sign 84 in Figure 4), the geographical coordinates of the requested address is derived and transmitted as the input information 51 in a subsequent step (designated by means of reference sign 85 in Figure 4) to the communication device 20. The input information 51 preferably comprise the geographical coordinates, i.e. the latitude and longitude information, preferably together with an identifier tag such as "GEO-DATA" or the like. For example, the input information 51 comprise the following information in case a location in Bonn, Germany, is searched:
"GEO-DATA: 50.44.05.N-7.06.02.E" (for 50° 44' 05" north and 7° 06' 02" east)

The communication device 20 receives the input information 51 and extracts the relevant geographical information by means, e.g., of a software program on a SIM card and/or of a Java application. The geographical information of the input information 51 is recognized, e.g., by means of the tag "GEO-DATA" such that a further processing of the input information is possible. Thereafter, the navigation application is activated in order to provide rout guidance to the destination location represented by the geographical content of the input information 51. This is performed, e.g., by storing the input information (or at least the geographical content of the input information 51) in the navigation memory 12 of the navigation device 10 (designated by means of reference sign 86 in Figure 4). The user acknowledges the activation of the navigation application in a further step (designated by means of reference sign 87 in Figure 4) in case that the communication device 20 is an integrated navigation and communication device 10. Alternatively, the input information 51 is transmitted to the navigation device 10 (designated by means of reference sign 88 in Figure 4) and the navigation application activated (designated by means of reference sign 89 in Figure 4) within the navigation device 10.

## Claims

1. Method for using a navigation application of a navigation device (10), wherein the navigation device is located at a departure location, wherein a communication module (21) comprises a mobile telecommunication interface (23), wherein the communication module (21) is assigned to the navigation device (10), wherein the navigation application requires the definition of at least one destination location, wherein the method comprises the following steps:
-- the communication module (21) receiving a message comprising an input information (51) related to the destination location, and
-- the navigation application using the input information (51) for route guidance from the current location of the navigation device (10) to the destination location,
wherein prior to receiving the input information (51) by the communication module (21), the method comprises the step of generating the input information (51) at a data centre (50) in dependency of an identity information,
wherein prior to generating the input information (51) by the data centre (50), the method comprises the step of requesting the input information by a client device and based on the identity information,
-- wherein the client device comprises the communication module (21), and
-- wherein the input information is requested via an electronic data message
-- wherein preferably the mobile telecommunication interface (23) is connected to a cellular or non-cellular communication network,
wherein the communication module (21) comprises a communication memory (22), wherein the identity information is stored in the communication memory (22) and wherein the step of requesting the input information (51) is conducted based on the identity information stored in the communication memory (22), wherein the input information (51) is transferred from the communication module (21) to the navigation application for route guidance to the destination location, and wherein the input information (51) is stored in the communication memory (22), the input information (51) being stored in the communication memory (22) in addition to the data set of the corresponding identity information for further usage.

2. Method according to claim 1, wherein the destination location is used by the navigation application for route guidance without a specific interaction of a user.

3. Method according to any of the preceding claims, wherein the navigation device (10) comprises a navigation memory (12) and wherein a representation of the destination location is stored in the navigation memory (12) without a specific interaction of a user.

4. Method according to any of the preceding claims, wherein the input information (51) comprises the geographical coordinates of the destination location, especially information about the geographical longitude and latitude of the destination location.

5. Method according to any of the preceding claims, wherein the identity information comprises at least one out of the following: a telephone number of a person associated to the destination location, an e-mail address of a person, a company or an organization associated to the destination location, an address information associated to the destination location, an URL (Uniform Resource Locator) associated to the destination location, a name information associated to the destination location.

6. Method according to any of the preceding claims, wherein the electronic data message is one out of a IP (Internet Protocol), UDP (User Datagram Protocol), a SMS (Short Message Service), a MMS (multimedia Message Service), the data centre (50) being preferably operated fully automatically.

7. Method according to any of the preceding claims, wherein the cellular or non-cellular communication network is one out of GSM (Global System for Mobile communication), UMTS (Universal Mobile Telecommunication System), CDMA (Code Division Multiple Access), LTE (Long Term Evolution), NGN (Next Generation Network), TETRA, TETRAPOL, shipping radio service, TV or radio broadcast service, satellite communication.

8. Method according to any of the preceding claims, wherein the communication memory (22) is part of a SIM card (Subscriber Identity Module card), or part of the fixed or removable memory of the communication module (21) or attached to the communication module (21).

9. Method according to any of the preceding claims, wherein the current location of the navigation device (10) is stored in the communication memory (22), wherein such storing in the communication memory (22) occurs preferably repeatedly, especially once in a predefined time interval and/or once in a predefined distance interval in case the navigation device is moved, wherein preferably the stored location information or plurality of location information of the navigation device (10) in the communication memory (22) is transferred via the communication module (21) to an external communication partner, a service centre for location based services, a fleet management office or any other recipient, and wherein preferably the current location of the navigation device (10) is in the form of GPS (Global Positioning System) geographical coordinates.

10. Method according to claim 9, wherein the function of storing the current location of the navigation device (10) in the communication memory (22) and/or the readout of the stored location information of the navigation device (10) in the communication memory (22) is activated manually by the user of the device, or is activated remotely, especially by a surveillance entity or a Law Enforcement Agency, wherein the remote activation is preferably unnoticeably or unrecognizable by the user.

11. Navigation device (10) for using a navigation application according to a method according any of the preceding claims, wherein the navigation device (10) is a mobile navigation device (10), wherein the navigation device (10) is preferably used on board of a motorized or non-motorized manpowered or autonomic operating vehicle, especially a car, a truck, a ship, a boat, an aircraft, or carried by a person.

12. Navigation device (10) according to claim 11,
-- wherein the navigation device (10) is an integrated navigation and communication device comprising the communication module (21), or
-- wherein a communication device (20) comprises the communication module (21), the communication device (20) being connectable to the navigation device (10) via a wired connection and/or via a wireless connection (15), especially a short range wireless connection and preferably according to one out of the following standards: NFC (Near Field Communication) and/or Bluetooth and/or WLAN (Wireless Local Area Network) and/or IR (InfraRed).

13. System for using a navigation application according to a method according any of the claims 1 to 10, wherein the system comprises the navigation device (10), the communication module (21), and wherein the system preferably comprises the data centre (50), the data centre (50) comprising preferably a surveillance or Law Enforcement entity.

14. Computer program product comprising software code that when executed on a computing system performs a method for using a navigation application according to any of claims 1 to 10.
